# FASCICULE DE BREVET EUROPEEN

(11) **EP 1 909 031 B1**
(45) Date de publication et mention de la délivrance du brevet: **08.02.2017**
(21) Numéro de dépôt: 07117658.0
(22) Date de dépôt: 01.10.2007
(51) Int. Cl.: F23R 3/30, F23R 3/34

(54) **Injecteur de carburant pour chambre de combustion de moteur à turbine à gaz**
Kraftstoffinjektor für Brennkammer eines Gasturbinenmotors
Fuel injector for the combustion chamber of a gas turbine engine

(30) Priorité: 06.10.2006 FR 0654137
(43) Date de publication de la demande: 09.04.2008
(73) Titulaire: Safran Aircraft Engines, 75015 Paris (FR)
(72) Inventeur: Bainville, François, 77140, SAINT PIERRE LES NEMOURS (FR); Sandelis, Denis, 77370, NANGIS (FR); Touchaud, Stéphane, 94300, VINCENNES (FR)
(74) Mandataire: Gevers & Orès

(56) Documents cités:
- EP-A- 1 199 523
- EP-A2- 1 278 014
- FR-A1- 2 695 713
- GB-A- 774 704
- GB-A- 824 306
- JP-A- 1 033 421
- US-A- 4 720 970
- US-A1- 2003 106 321
- US-A1- 2006 101 814

## Description

La présente invention concerne le domaine des moteurs à turbine à gaz et vise en particulier les moyens d'injection du carburant dans la chambre de combustion d'un tel moteur.

La chambre de combustion d'un moteur à turbine à gaz est disposée fonctionnellement entre la section de compression dont elle reçoit l'air après qu'il a été comprimé et la section de turbine qu'elle alimente en gaz chaud. Elle est contenue généralement à l'intérieur d'une enceinte annulaire délimitée par un carter radialement extérieur et une paroi radialement intérieure protégeant les arbres moteurs. Selon un mode de réalisation de l'art antérieur, la chambre où se produit la combustion est elle-même définie entre deux viroles coaxiales l'une interne, l'autre externe, maintenues espacées des deux parois ci-dessus mentionnées par des brides ou appuis appropriés. Le fond de chambre en amont, du côté du compresseur, est pourvu d'un carénage amont par lequel le flux d'air incident en sortie du diffuseur est distribué en partie vers l'intérieur de la chambre où se produit la combustion primaire et en partie en aval de cette dernière en la contournant. Des moyens d'injection de carburant associés à des déflecteurs de guidage d'air assurant la formation d'un mélange d'air carburé tourbillonnant qui débouche dans la chambre à travers des ouvertures ménagées dans le fond de chambre qui comprend également des déflecteurs contrôlant la circulation de l'air carburé.

Ce système ne permet pas une combustion optimale à tous les régimes de fonctionnement dont les conditions varient entre le ralenti moteur et le régime plein gaz. Afin d'améliorer le fonctionnement de la chambre de combustion à ces différents régimes et de satisfaire aux contraintes visant la réduction de la pollution, on cherche à limiter d'une part la formation de résidus de combustion imbrûlés résultant de mélanges trop riches en hydrocarbure et d'autre part la formation d'oxyde d'azote liés à la température de flamme.

On a proposé des architectures de chambre avec des mélangeurs adaptés pour le fonctionnement respectivement en mode ralenti et en mode plein gaz. Par exemple, on connaît une chambre de combustion annulaire double avec un étagement radial des mélangeurs de manière à former des zones de combustion distinctes convenablement alimentées selon le régime. Au ralenti seuls les mélangeurs radialement extérieurs sont alimentés en carburant définissant des zones de combustion primaires de ralenti. Au régime plein gaz les mélangeurs radialement intérieurs sont alimentés à leur tour pour une combustion optimale.

On a développé également des chambres de combustion avec des mélangeurs à flux gazeux tourbillonnaires annulaires doubles. Dans un tel mélangeur, le carburant fourni par un injecteur pilote central est mélangé à un premier flux d'air annulaire tourbillonnant pour alimenter une première zone de combustion de ralenti. Le mélangeur comprend un dispositif d'injection supplémentaire, de forme annulaire et coaxial au premier débitant le carburant radialement dans un deuxième flux d'air tourbillonnant coaxial au premier. Ce second injecteur est alimenté en fonction de la demande en puissance du moteur. Un exemple de ce dispositif est décrit dans le brevet US 6 484 489.

Le document EP 1 531 305 décrit un dispositif d'injection de carburant multipoint pour chambre de combustion de moteur à turbine à gaz comprenant une pluralité de buses d'injection de carburant disposées en au moins deux rangées par exemple concentriques avec des moyens commandant l'alimentation en carburant séparément dans chacune des rangées. Les buses comprennent chacune un canal avec des moyens tels que des vrilles pour y créer un flux tourbillonnaire. Ce dispositif permet de maintenir une flamme, dans chaque rang de buses, à une température suffisante pour réduire l'émission de gaz polluant.

Le document US2003/0106321A1 décrit un injecteur de carburant multipoint pour une chambre de combustion de moteur à turbine à gaz.

La présent invention a pour objectif la réalisation d'un injecteur de carburant permettant une combustion étagée, c'est-à-dire permettant de créer une zone de combustion en phase de ralenti et une zone de combustion principale, satisfaisant aux contraintes toujours plus sévères relatives à l'émission de polluants.

On parvient à cet objectif avec un injecteur de carburant pour chambre de combustion de moteur à turbine à gaz selon l'objet de la revendication 1.

Alors que dans l'art antérieur le flux d'air principal entoure la zone de combustion pour le fonctionnement au ralenti et la masque d'une certaine manière, la solution de l'invention permet de créer une zone de combustion pour le fonctionnement au ralenti qui n'est pas masquée par le flux d'air principal, la propagation de la flamme dans les directions latérales s'en trouve améliorée.

De préférence en raison des débits respectifs entre le ralenti et les régimes jusqu'au plein gaz, le rapport est n1/n2 <=1/2 et plus particulièrement n1/n2 <=1/3. Par exemple pour des orifices de ralenti de diamètre ϕ1 en millimètre, tel que 0,5 < ϕ1 <0,8 et des orifices d'injection principaux de diamètre ϕ2, tel que 0,8 <ϕ2 <1,2, les valeurs peuvent être n1=4 et n2= 8.

Conformément à l'invention, l'injecteur comprend un canal central d'alimentation en air primaire, les orifices d'injection étant répartis autour du dit canal formant canal d'air primaire. L' injecteur comprend une portion formant distributeur annulaire dont au moins une partie des orifices d'injection de carburant, est ménagée sur une plaque transversale. Une plaque formant bouclier et percée d'orifices de prémélange est disposée en travers d'au moins une partie des orifices d'injection de carburant. Plus particulièrement, lesdits orifices de prémélange sont disposés de manière à être balayés par de l'air du flux primaire de manière à assurer un prémélange d'air primaire avec du carburant issu des orifices d'injection. Par cette solution, on réalise un prémélange de carburant et d'air dès la sortie de l'injecteur.

Afin d'assurer un prémélange efficace, le canal central peut être pourvu d'une vrille par laquelle l'air entrant dans le canal est mis en mouvement de rotation axiale.

Conformément à l'invention, l'injecteur comprend un canal annulaire d'alimentation en air secondaire coaxial à l'anneau formé par les orifices d'injection de carburant. Plus particulièrement la plaque formant bouclier est percée d'orifices de prémélange d'air secondaire avec du carburant issu des orifices d'injection.

Avantageusement le canal annulaire d'air secondaire peut être pourvu d'une vrille.

La présente invention porte également sur un moteur à turbine à gaz comprenant une chambre de combustion annulaire avec des injecteurs selon l'invention répartis autour de l'axe de la chambre et dont les secteurs d'injection de carburant au ralenti sont disposés radialement à l'extérieur par rapport à l'axe de la chambre de combustion.

Le procédé de fonctionnement du moteur consiste, au ralenti, à alimenter le seul conduit d'alimentation de ralenti de manière à former une zone de combustion annulaire radialement extérieure constituée des zones de combustion relatives à chacun des injecteurs. Par leur disposition ces zones sont dans la proximité immédiate des bougies qui assurent un allumage efficace.

D'autre caractéristiques et avantages apparaîtront à la lecture de la description d'un mode de réalisation non limitatif de l'invention en référence aux dessins annexés sur lesquels
La figure 1 représente en coupe axiale un exemple de chambre de combustion installée sur des moteurs à turbine à gaz en exploitation,
La figure 2 représente schématiquement un injecteur de l'invention, en coupe axiale, vu de profil,
La figure 3 montre l'injecteur vu de face selon la direction III-III,
La figure 4 montre le schéma de principe du prémélange du carburant avec l'air incident.

La chambre de combustion 1 de moteur à turbine à gaz auquel est susceptible de s'appliquer l'injecteur de l'invention est annulaire et est montée, comme cela est connu, entre une enveloppe extérieure 2 et une enveloppe 3 intérieure, cylindrique, dans l'axe moteur. Les enveloppes 2 et 3 ménagent ainsi un espace annulaire ouvert en amont, par rapport à l'écoulement gazeux, sur un diffuseur 4 communiquant avec le dernier étage de compresseur, non représenté. La chambre est ouverte en aval sur le premier étage de turbine, non représenté, recevant les gaz chauffés dans la chambre. La chambre est composée d'une paroi externe 5 et d'une paroi interne 6 sous forme de viroles assemblées et soutenues par des brides appropriées aux éléments de l'enveloppe. En amont la chambre est délimitée par une paroi 7 de fond de chambre, transversale par rapport à l'écoulement gazeux dans la chambre. Cette paroi 7 est pourvue d'ouvertures axiales, circulaires, dans lesquelles débouchent le carburant et de l'air de combustion primaire. Une partie de cet air et le carburant sont mélangés dans des mélangeurs 8, chacun ouvert sur une des ouvertures circulaires. Ces mélangeurs sont logés dans des carénages 9 canalisant le flux d'air issu du diffuseur 4. Ils comprennent généralement des vrilles axiales et ou radiales par lesquelles l'air est introduit, mis en rotation et devient tourbillonnaire. Le carburant est injecté à ce niveau dans le flux tourbillonnaire dans chaque mélangeur par un injecteur 10 de carburant qui le pulvérise en fines gouttelettes. Celles-ci sont mélangées et vaporisées par l'air délivré à travers les vrilles et le mélange produit est introduit dans la chambre. Dans l'exemple représenté le fond de chambre comprend des orifices supplémentaires avec des déflecteurs 11. On observe la présence d'une bougie 13, radiale, fixée sur l'enveloppe 2, et affleurant par son extrémité la paroi extérieure 5 de la chambre de combustion à travers une ouverture. La bougie est à une distance axiale déterminée du fond de chambre de façon à allumer le mélange air carburant dont les limites sont figurées par un cône d'éjection de carburant.

L'invention vise à réduire les émissions polluantes au régime de ralenti en créant une zone de combustion de ralenti et en créant les conditions d'un rallumage.

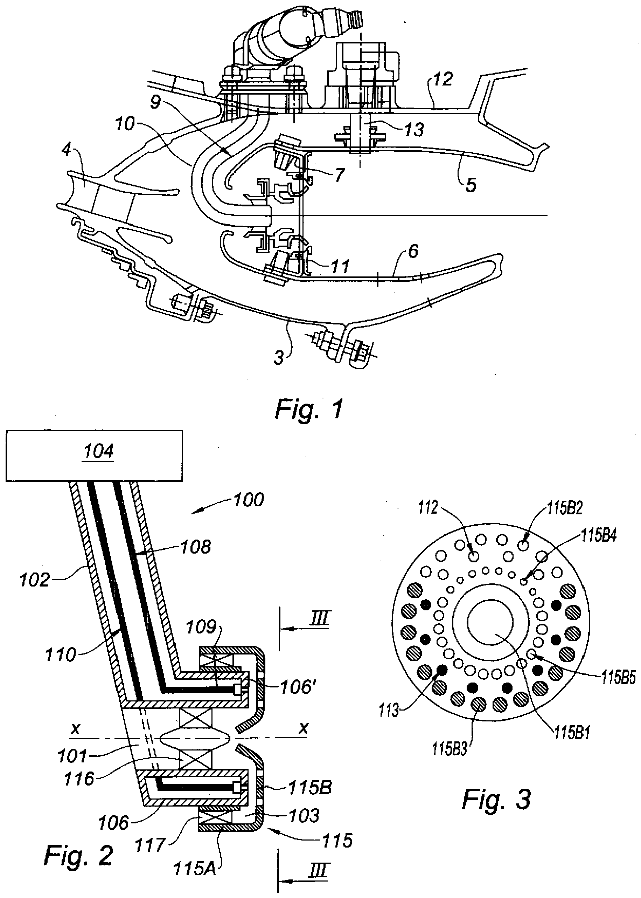

La figure 2 montre un exemple d'injecteur conforme à l'invention.

L'injecteur 100 comprend une portion tubulaire 102 montée sur une platine 104 par laquelle il est fixé à un support approprié sur la chambre de combustion. La portion tubulaire se prolonge par une portion, formant distributeur 106 de carburant, de forme annulaire, fermée par une paroi transversale 106'. L'axe XX de ce distributeur 106 correspond à l'axe d'injection du carburant dans la chambre de combustion. Un premier et un second conduits d'alimentation en carburant, 108 et 110 respectivement, sont logés dans l'injecteur et sont en communication avec des circuits d'alimentation appropriés à travers la platine 104. Les conduits 108 et 110 passent dans le distributeur 106. Les conduits alimentent chacun un collecteur 109 et 110 respectivement. Les collecteurs sont ouverts vers l'aval avec des orifices 112 et 113 respectivement ménagés dans la paroi transversale 106' du distributeur 106. Les orifices sont calibrés en fonction du débit respectif de chacun des conduits.

Le distributeur annulaire forme un canal central 101 cylindrique, d'axe XX, ouvert en amont et en aval. Ce canal 101 d'air primaire comprend une vrille à écoulement axial 116 constituée d'ailette radiale, induisant un mouvement de rotation autour de l'axe à l'air primaire qui s'est engagé dans ce canal par l'ouverture amont.

Sur le distributeur 106 est montée une pièce 115 de prémélange. Cette pièce 115 comprend une partie en forme de manchon 115A délimitant un canal annulaire 103 d'air secondaire avec la partie cylindrique du distributeur 106 d'axe XX. Le canal est ouvert en amont et comprend une vrille 117, constituée d'ailettes radiales. La vrille a pour fonction de forcer le flux d'air qui la traverse dans un mouvement de rotation autour de l'axe XX. Le manchon 115A est fermé en aval par une plaque 115B perpendiculaire à l'axe XX. La plaque est distante de la paroi transversale 106' du distributeur. Cette plaque comprend une ouverture centrale 115B1 avec un rebord ménageant une surface de guidage de forme tronconique 115C, dont l'axe est XX. La plaque 115B est à une distance déterminée de la paroi 106' et comprend des orifices 115B2, 115B3, 115B4 et 115B5 de prémélange.

Les orifices de prémélanges sont agencés en relation avec les orifices d'injection 112 et 113.

Dans l'exemple correspondant à la représentation de la figure 3, l'injecteur comprend n1 = 4 orifices 112 d'injection de carburant de ralenti et n2= 8 orifices 113 d'injection de carburant principal. Les orifices sont calibrés en fonction des débits requis. Leur nombre est choisi en fonction aussi du diamètre D de l'injecteur. Le nombre total peut aller jusqu'à 18 sans poser de problème de tenu mécanique.

Par exemple, les orifices de ralenti 112 ont un diamètre ϕᵢ₁ compris entre 0,5 et 0,8 mm et les orifices d'injection de carburant principal 113 ont un diamètre ϕᵢ₂ compris entre 0,8 et 1,3 mm. Le diamètre D de l'injecteur est choisi de façon à en permettre une répartition annulaire satisfaisante. Par exemple D est de l'ordre de 50 à 70 mm.

Les orifices 115B2, 115B3, 115B4 et 115B5 de prémélange sur la plaque 115B forment deux couronnes situées radialement de part et d'autre de la couronne formée par les orifices 112 et 113. Les diamètres ϕₚ de ces orifices 115B2, 115B3, 115B4 et 115B5 de prémélange sont déterminés en fonction de ceux des orifices 112 et 113.

Dans l'exemple considéré le diamètre des orifices de prémélange de ralenti ϕₚ₁ est compris entre 1 et 1,5 mm tandis que celui ϕₚ₂ des orifices de prémélange de carburant principal est compris entre 2 et 3 mm.

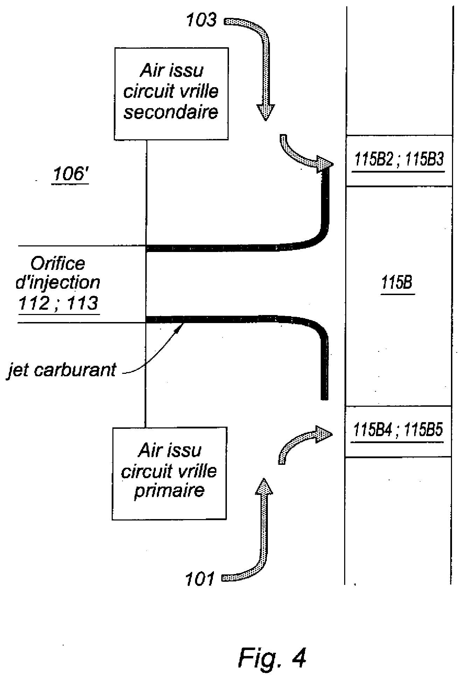

On décrit le principe de fonctionnement de cet injecteur multipoint à prémélange ci-après en référence à la figure 4.

Le carburant injecté par les orifices 112 ou 113 vient heurter la plaque 115B entre deux orifices (115B2 et 115B4) ou (115B3 et 115B5) de prémélange. L'espace entre la paroi 106' et la plaque 115B, de l'ordre de 2 à 4 mm dans l'exemple, est parcouru d'un côté par l'air primaire issu du canal 101 et de l'autre par l'air secondaire issu du canal 103. Le carburant qui s'étale radialement sous la forme d'un film en direction des orifices de prémélange est entraîné par l'air qui s'échappe au travers de ces derniers. Il est alors vaporisé et un mélange air carburant se forme. En aval de la plaque, le mélange est entraîné dans la direction XX où il est brûlé. Les diamètres et débit sont déterminés de façon à ce que le mélange ait une vitesse et soit à une richesse locale qui évitent toute inflammation dans les orifices de prémélange.

Afin d'améliorer la vaporisation du carburant, des perturbateurs d'écoulement peuvent être incorporés aux parois 106' et 115B. En outre le carburant remplit une fonction de refroidissement ce qui est favorable à la durée de vie de l'injecteur.

Comme on le voit sur la figure 2, une partie de l'air issu du canal primaire 101 est guidée dans l'espace de prémélange ; l'autre partie s'échappe par l'orifice central 115B1 et forme un film d'air anti-cokéfaction sur la partie externe de la plaque 115B.

On observe aussi que l'air primaire et l'air secondaire peuvent être entraînés en rotation autour de l'axe XX soit dans le même sens soit dans des sens opposés. Ils peuvent aussi ne pas avoir de composante tangentielle.

Un avantage important de cet agencement est de permettre la création d'une zone de combustion de ralenti située du côté extérieur de la chambre de combustion où le mélange carburé est aisément allumé par les bougies situées sur la paroi extérieure. Lorsque le mélange carburé est allumé au niveau d'un injecteur, la flamme est propagée aisément aux autres injecteurs en raison de la forme annulaire de la zone carburée.

L'allumage des circuits principaux se fait par propagation de la flamme également dès que les circuits correspondants des injecteurs sont alimentés.

Entre les deux circuits le fonctionnement est le suivant :
A faible charge le circuit de ralenti seul est allumé.

Aux régimes intermédiaires jusqu'au régime de plein gaz les deux circuits sont alimentés en carburant la combustion s'étend radialement sur toute la chambre. Le rapport des débits entre le carburant du circuit principal et du circuit de ralenti s'échelonne pratiquement entre 0,7 et 1,2. Cet étagement de la combustion favorise ainsi la réduction des émissions par la zone de combustion de ralenti.

Au régime de plein gaz, le rapport entre les débits des deux circuits est compris entre 1,8 et 2,2. On réduit la formation de fumées et de gaz polluants NOx.

Par sa structure compacte, l'injecteur peut être incorporé aisément aux dispositifs existant de d'alimentation en carburant de chambre de combustion sans nécessiter des modifications majeures.

## Revendications

1. Injecteur de carburant pour chambre de combustion de moteur à turbine à gaz comprenant un premier conduit d'alimentation en carburant pour un fonctionnement au ralenti et un second conduit d'alimentation principal en carburant pour un fonctionnement jusqu'au régime de plein gaz, des premiers (112) et des seconds (113) orifices d'injection avec lesquels les deux conduits d'alimentation communiquent respectivement, **caractérisé par le fait qu'**il comprend n1 orifices de ralenti (112) et n2 orifices principaux (113), dans un rapport n1/n2<1, les orifices d'injection (112, 113) étant disposés en anneau, les premiers orifices (112) occupant un secteur dudit anneau, l'injecteur comprenant un canal central (101) d'alimentation en air primaire, les orifices d'injection (112, 113) étant répartis annulairement autour du dit canal central, l'injecteur comprenant une portion formant distributeur (106) annulaire d'axe XX dont au moins une partie des orifices (112, 113) d'injection de carburant est ménagée sur une plaque transversale (106') à l'axe XX, une plaque (115B) formant bouclier et percée d'orifices de prémélange (115B2, 115B3, 115B4, 115B5) étant disposée transversalement aux orifices d'injection (112, 113) de carburant, certains desdits orifices (115B5, 115B4) de prémélange étant disposés de manière à être balayés par de l'air du flux d'air primaire de manière à assurer un pré-mélange d'air primaire avec du carburant issu des orifices d'injection (112, 113), l'injecteur comprenant un canal annulaire (103) d'alimentation en air secondaire coaxial à l'anneau formé par les orifices (112, 113) d'injection, la plaque (115B) formant bouclier étant percée légalement d'orifices (115B3, 115B2) de pré-mélange d'air secondaire avec du carburant issu des orifices d'injection (112, 113).

2. Injecteur selon la revendication 1 avec n1/n2<=1/2.

3. Injecteur selon la revendication 2 avec n1/n2 <=1/3.

4. Injecteur selon l'une des revendications 1 à 3 dont le canal central (101) est pourvu d'une vrille.

5. Injecteur selon l'une des revendications 1 à 4 dont le canal annulaire (103) est pourvu d'une vrille.

6. Moteur à turbine à gaz comprenant une chambre de combustion annulaire avec des injecteurs (100) selon l'une des revendications 1 à 5 répartis autour de l'axe de la chambre dont les dits secteurs d'injection de carburant au ralenti sont disposés radialement à l'extérieur.

7. Procédé de fonctionnement d'un moteur selon la revendication précédente consistant, au ralenti, à alimenter le seul circuit d'alimentation de ralenti de manière à former une zone de combustion annulaire radialement extérieure.

## Patentansprüche

1. Treibstoffeinspritzvorrichtung für eine Brennkammer eines Gasturbinenmotors, umfassend eine erste Treibstoffzuleitung für einen Leerlaufmodus und eine zweite Haupttreibstoffzuleitung für einen Modus bis zum Vollgasbetrieb, erste (112) und zweite (113) Einspritzöffnungen, mit denen die beiden Zuleitungen jeweils in Verbindung stehen, **dadurch gekennzeichnet, dass** sie n1 Leerlauföffnungen (112) und n2 Hauptöffnungen (113) in einem Verhältnis n1/n2<1 umfasst, wobei die Einspritzöffnungen (112, 113) ringförmig angeordnet sind, wobei die ersten Öffnungen (112) einen Sektor des Ringes einnehmen, wobei die Einspritzvorrichtung einen zentralen Kanal (101) zur Versorgung mit Primärluft umfasst, wobei die Einspritzöffnungen (112, 113) ringförmig um den zentralen Kanal verteilt sind, wobei die Einspritzvorrichtung einen Abschnitt umfasst, der einen ringförmigen Verteiler (106) mit einer Achse XX bildet, wobei mindestens ein Teil der Treibstoffeinspritzöffnungen (112, 113) auf einer Querplatte (106') zur Achse XX ausgenommen ist, wobei eine Platte (115B) einen Schild bildet und mit Vormischöffnungen (115B2, 115B3, 115B4, 115B5) versehen ist und quer zu den Treibstoffeinspritzöffnungen (112, 113) angeordnet ist, wobei gewisse der Vormischöffnungen (115B5, 115B4) derart angeordnet sind, dass sie von der Luft des Primärluftstroms gestreift werden, um ein Vormischen von Primärluft mit dem von den Einspritzöffnungen (112, 113) kommenden Treibstoff zu gewährleisten, wobei die Einspritzvorrichtung einen ringförmigen Kanal (103) zur Versorgung mit Sekundärluft koaxial zu dem von den Einspritzöffnungen (112, 113) gebildeten Ring umfasst, wobei die Platte (115B), die den Schild bildet, ebenfalls mit Öffnungen (115B3, 115B2) zum Vormischen von Sekundärluft mit dem von den Einspritzöffnungen (112, 113) kommenden Treibstoff versehen ist.

2. Einspritzvorrichtung nach Anspruch 1 mit n1/n2≤1/2.

3. Einspritzvorrichtung nach Anspruch 2 mit n1/n2≤1/3.

4. Einspritzvorrichtung nach einem der Ansprüche 1 bis 3, deren zentraler Kanal (101) mit einer Förderschnecke versehen ist.

5. Einspritzvorrichtung nach einem der Ansprüche 1 bis 4, deren ringförmiger Kanal (103) mit einer Förderschnecke versehen ist.

6. Gasturbinenmotor, umfassend eine ringförmige Brennkammer mit Einspritzvorrichtungen (100) nach einem der Ansprüche 1 bis 5, die um die Achse der Kammer verteilt sind, deren Sektoren zum Einspritzen von Treibstoff im Leerlauf radial außen angeordnet sind.

7. Verfahren für den Betrieb eines Motors nach dem vorhergehenden Anspruch, darin bestehend, im Leerlauf nur die Leerlaufzuleitung zu speisen, um eine radial äußere ringförmige Verbrennungszone zu bilden.

## Claims

1. Fuel injector for a gas turbine engine combustion chamber, comprising a first fuel supply line for running at idle speed, and a second, main fuel supply line for running at speeds up to full throttle, first injection orifices (112) and second injection orifices (113) with which the two supply lines respectively communicate, **characterised in that** it comprises n1 orifices for idle (112) and n2 main orifices (113) in a ratio n1/n2<1, the injection orifices (112, 113) being arranged in a ring, the first orifices (112) occupying one sector of said ring, the injector comprising a central primary-air supply duct (101), the injection orifices (112, 113) being distributed annularly about said central duct, the injector comprising an annular distributor-forming portion (106) of axis XX, in which at least some of the fuel injection orifices (112, 113) are formed on a plate (106') transverse to the axis XX, a screen-forming plate (115B) pierced with pre-mixing orifices (115B2, 115B3, 115B4, 115B5) being positioned transversely to the fuel injection orifices (112, 113), some of said premixing orifices (115B5, 115B4) being positioned in such a way as to be swept by the air of the primary-air flow so as to premix primary air with fuel from the injection orifices (112, 113), the injector comprising an annular secondary-air supply duct (103) coaxial with the ring formed by the injection orifices (112, 113), the screen-forming plate (115B) also being pierced with orifices (115B3, 115B2) for premixing secondary air with fuel from the injection orifices (112, 113).

2. Injector according to claim 1, where n1/n2<=1/2.

3. Injector according to claim 2, where n1/n2 <=1/3.

4. Injector according to one of claims 1 to 3, wherein the central duct (101) has a swirl inducer.

5. Injector according to one of claims 1 to 4, wherein the annular duct (103) has a swirl inducer.

6. Gas turbine engine comprising an annular combustion chamber with injectors (100) according to one of claims 1 to 5, distributed about the axis of the chamber, wherein said idling fuel injection sectors are positioned radially outside.

7. Method of running an engine according to the previous claim, consisting, at idle, in supplying only the idle supply circuit so as to form a radially outer annular combustion zone.
